# EUROPEAN PATENT APPLICATION

(11) **EP 3 910 281 A1**
(43) Date of publication of application: **17.11.2021**
(21) Application number: 19909445.9
(22) Date of filing: 11.12.2019
(51) Int. Cl.: G01B 7/06, G01M 17/02

(54) **DEVICE FOR MEASURING TIRE WEAR**

(30) Priority: 09.01.2019 JP 2019001774
(71) Applicant: Alps Alpine Co., Ltd., Tokyo 145-8501 (JP)
(72) Inventor: YAMAMOTO, Akihito, Tokyo 145-8501 (JP); SEJIMO, Kazushige, Tokyo 145-8501 (JP); NAKAMURA, Tokuo, Tokyo 145-8501 (JP)
(74) Representative: Schmitt-Nilson Schraud Waibel Wohlfrom Patentanwälte Partnerschaft mbB
(86) International application number: PCT/JP2019/048559
(87) International publication number: WO 2020/145012

(57) **Abstract**

A wear measuring apparatus 10 includes a magnetic substance 11 embedded in a tread 51, a bias magnet 12 that magnetizes a steel wire 52, and a magnetic sensor 13 that detects the magnetic force of the magnetic substance 11. The wear measuring apparatus 10 can accurately measure the magnetic force of the magnetic substance 11 embedded in the tread 51 using the magnetic sensor 13 by magnetizing the steel wire 52 in advance with the bias magnet 12 to reduce a change in the magnetized state of the steel wire 52 due to an external magnetic field. This allows the wear measuring apparatus 10 to accurately measure the wear of the tread 51 of a tire 50 including the steel wire 52 by reducing the influence of the external magnetic field.

## Description

### Technical Field

The present invention relates to a tire-wear measuring apparatus that measures tire wear status and outputs information, for example, for displaying the wear status in real time or reporting that the wear has reached a predetermined amount.

### Background Art

Progress of tire wear may decrease grip performance in driving on a road surface or the draining function for draining water between the tire and a wet road surface. For those reasons, drivers or vehicle managers check tread wear status visually on the basis of slip signs provided at the grooves and replace the tire before the tire exceeds the service limit to ensure safety.

However, the visual check is troublesome and can lead to incorrect estimation of the tread wear status. This can result in continuous use of the tire with reduced performance. This is undesirable from the viewpoint of safety.

Accordingly, methods for checking tire wear not by manual checking have been proposed. For example, PTL 1 describes a method for measuring the groove shape and wear of a tire by detecting a magnetic force emitted from a magnet inserted in the tread of the tire using a magnetic sensor provided inside the tire.

### Citation List

### Patent Literature

PTL 1: U.S. Patent Application Publication No. 2010/0276044

### Summary of Invention

### Technical Problem

The method of measurement described in PTL 1 measures tire wear by detecting the magnetic force which decreases with the progress of the wear of the tread using a magnetic sensor. However, with this measuring method, if an external magnetic field is present in addition to the magnetic force from the magnet inserted in the tread, tire wear cannot be accurately measured. Furthermore, if the steel wire in the tire is magnetized by the external magnetic field, the magnetic force from the steel wire also causes measurement error. For those reasons, it has been difficult to measure the magnetic force which decreases with the progress of tread wear using the magnetic sensor to accurately estimate the tire wear status.

An object of the present invention is to provide a tire-wear measuring apparatus that can accurately measure the wear of a tire equipped with a steel wire by reducing the influence of an external magnetic field.

### Solution to Problem

The present invention is a tire-wear measuring apparatus that measures the wear of a tread of a tire including a steel wire. The apparatus includes a magnetic substance embedded in the tread, at least one bias magnet that magnetizes the steel wire, and a magnetic sensor that detects a magnetic force. The bias magnet and the magnetic sensor are preferably disposed on the inner surface of the tire. The steel wire may be magnetized to saturation by the bias magnet.

Disposing the bias magnet to magnetize the steel wire in advance reduces a change in the magnetized state of the steel wire due to the influence of an external magnetic field.

A wire magnetizing direction in which the bias magnet magnetizes the steel wire may be an orthogonal direction orthogonal to a laminating direction in which the steel wire and the tread are laminated. In this case, a magnetic-substance magnetizing direction in which the magnetic substance is magnetized may be orthogonal to the wire magnetizing direction.

A wire magnetizing direction in which the bias magnet magnetizes the steel wire may be a laminating direction in which the steel wire and the tread are laminated. In this case, a magnetic-substance magnetizing direction in which the magnetic substance is magnetized may be parallel to the wire magnetizing direction.

In the tire-wear measuring apparatus, the at least one bias magnet may include two bias magnets. The tire-wear measuring apparatus may further include a yoke connecting the two bias magnets. The use of the yoke allows combining the magnetic forces (magnetic fluxes) of the two bias magnets to magnetize the steel wire efficiently.

The tire-wear measuring apparatus may further include a radio communication means. The use of the radio communication means allows transmitting information on the measurement with the magnetic sensor to an external apparatus, such as a vehicle-side apparatus.

### Advantageous Effects of Invention

The tire-wear measuring apparatus of the present invention can reduce a change in the magnetized state of the steel wire due to an external magnetic field by magnetizing the steel wire in advance with the bias magnet. This reduces the influence of the change in the magnetized state of the steel wire in measuring the magnetic force from the magnetic substance embedded in the tread, allowing accurately measuring the wear of the tread.

### Brief Description of Drawings

[Fig. 1] Fig. 1(a) is a schematic cross-sectional view of a tire provided with a tire-wear measuring apparatus according to a first embodiment. Fig. 1(b) is an enlarged cross-sectional view of the area enclosed by the dashed-dotted line in Fig. 1(a).
[Fig. 2] Fig. 2(a) is a schematic cross-sectional view of the tire provided with a tire-wear measuring apparatus according to a modification of the first embodiment. Fig. 2(b) is an enlarged cross-sectional view of the area enclosed by the dashed-dotted line in Fig. 2(a).
[Fig. 3] Fig. 3(a) is a schematic cross-sectional view of the tire provided with a tire-wear measuring apparatus according to a second embodiment. Fig. 3(b) is an enlarged cross-sectional view of the area enclosed by the dashed-dotted line in Fig. 3(a).
[Fig. 4] Fig. 4(a) is a schematic cross-sectional view of the tire provided with a tire-wear measuring apparatus according to a modification of the second embodiment. Fig. 4(b) is an enlarged cross-sectional view of the area enclosed by the dashed-dotted line in Fig. 4(a).

### Description of Embodiments

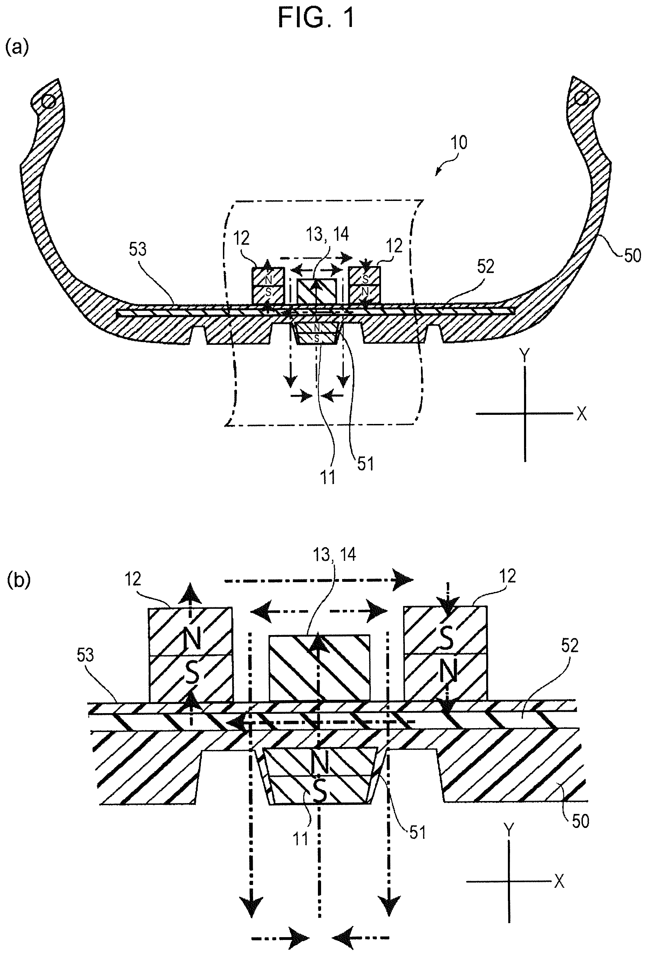

Embodiments of the present invention will be described with reference to Fig. 1 to Fig. 4. In the drawings, magnetic field lines are schematically indicated by the two-dot chain line arrows, and the same components are given the same numbers and descriptions thereof will be omitted as appropriate.

### [First Embodiment]

Fig. 1(a) is a schematic cross-sectional view of a tire 50 provided with a tire-wear measuring apparatus 10 according to the present embodiment. Fig. 1(b) is an enlarged cross-sectional view of the area enclosed by the dashed-dotted line in Fig. 1(a).

The tire-wear measuring apparatus 10 illustrated in Fig. 1(a) and Fig. 1(b) is an apparatus for measuring the wear of a tread 51 of the tire 50 including a steel wire 52 and includes a magnetic substance 11, bias magnets 12, a magnetic sensor 13 that detects the magnetic force of the magnetic substance 11, and a radio communication means 14 that sends information measured by the magnetic sensor 13 to a vehicle-side apparatus or the like.

The magnetic substance 11 is embedded in part of the tread 51 and is worn down with the wear of the tread 51. For this reason, the magnetic force generated by the magnetic substance 11 decreases with the wear of the tread 51. Accordingly, the wear of the tread 51 can be estimated by measuring the magnetic force from the magnetic substance 11 with the magnetic sensor 13.

However, in an environment in which the tire 50 is actually used, an external magnetic field is present in addition to the magnetic force from the magnetic substance 11. The external magnetic field acts as noise in measuring the magnetic force from the magnetic substance 11, causing a decrease in the accuracy of measurement of the magnetic force using the magnetic sensor 13.

The external magnetic field magnetizes the steel wire 52 to act as noise even after it is applied to the tire 50, in addition to the noise due to application to the tire 50. In other words, when the steel wire 52 is magnetized by the external magnetic field, the magnetic force from the steel wire 52 magnetized by the magnetic sensor 13 is measured by the magnetic sensor 13 even after the external magnetic field is removed. The magnetic force from the steel wire 52 acts as noise in measuring the magnetic force from the magnetic substance 11 which decreases as the tread 51 wears. Since the steel wire 52 is positioned nearer to the magnetic sensor 13 than the magnetic substance 11 of the tread 51, the change in the magnetized state of the steel wire 52 exerts significant influence on the measurement of magnetism emitted from the magnetic substance 11.

For those reasons, the tire-wear measuring apparatus 10 of the present embodiment includes the bias magnets 12 for magnetizing the steel wire 52 in advance. Forming a closed magnetic path in the tire 50 using two bias magnets 12 to magnetize the steel wire 52 in advance prevents the magnetized state of the steel wire 52 from being changed by the influence of the external magnetic field.

The magnetic force of the magnetic substance 11 embedded in the tread 51 is released from outside the closed magnetic path. The magnetic sensor 13 measures the sum of the magnetic force from the steel wire 52 and the magnetic force from the magnetic substance 11. Since a change in the magnetized state of the steel wire 52 can be reduced by magnetizing the steel wire 52 with the bias magnets 12, the magnetic sensor 13 can accurately measure the magnetic force from the magnetic substance 11.

It is preferable that the steel wire 52 be magnetized to saturation by the bias magnets 12 from the viewpoint of reducing the influence of the external magnetic field. The saturated magnetization of the steel wire 52 makes the magnetized state of the steel wire 52 constant to thereby prevent a change in the magnetized state due to the external magnetic field. In other words, the saturated magnetization of the steel wire 52 using the bias magnets 12 prevents the magnetized state of the steel wire 52 from being changed, so that the magnetic sensor 13 can accurately measure a change in the magnetic force from the magnetic substance 11.

In the tire-wear measuring apparatus 10, the bias magnets 12 are arranged so that opposite magnetic poles face the inner surface 53 of the tire 50 so that opposite magnetic field lines extend to the steel wire 52. For example, in Fig. 1(b), the bias magnet 12 on the viewer's right is disposed such that the end face on the N-pole side faces the inner surface 53, and the bias magnet 12 on the viewer's left is disposed such that the end face on the S-pole side faces the inner surface 53. This configuration makes the wire magnetizing direction in which the steel wire 52 is magnetized to an orthogonal direction (the X-axis direction, the widthwise direction of the tire 50) orthogonal to the laminating direction (the Y-axis direction) in which the steel wire 52 and the tread 51 are layered, and makes the magnetic-substance magnetizing direction in which the magnetic substance 11 is magnetized to the direction (the Y-axis direction) orthogonal to the wire magnetizing direction. The orthogonalization of the wire magnetizing direction and the magnetic-substance magnetizing direction allows accurately measuring a change in the magnetic force from the magnetic substance 11 using the magnetic sensor 13. However, the relationship between the wire magnetizing direction and the magnetic-substance magnetizing direction is not limited to the above.

The magnetic sensor 13 includes a magneto-resistive sensor that measures magnetism and that changes in resistance depending on the direction and strength of the magnetism. Examples of the magneto-resistive sensor include a giant magneto-resistive (GMR) sensor and a tunnel magneto-resistive (TMR) sensor. Measurement using the magnetic sensor 13 need not be continuously performed in real time and may be intermittently performed at regular intervals. Alternatively, the measurement may be performed according to an external instruction received via the radio communication means 14. The measurement at regular intervals or according to an instruction allows the power consumption to be reduced as compared with continuous measurement. A Hall element may be used as the magneto-resistive sensor, which is the magnetic sensor 13, to measure a change in the strength of the magnetic flux.

The tire-wear measuring apparatus 10 includes the radio communication means 14 that outputs information on the wear of the tire 50 based on the measurement of magnetism with the magnetic sensor 13 to a vehicle-side apparatus (not shown). The radio communication means 14 allows transmitting information of the result of measurement using the magnetic sensor 13 to a vehicle-side apparatus and receiving information from the vehicle-side apparatus. The transmission and reception of the information via communication between the tire-wear measuring apparatus 10 and the external apparatus is controlled by a central processing unit (CPU, not shown).

The bias magnets 12, the magnetic sensor 13, and the radio communication means 14 are provided on the inner surface 53 of the tire 50 opposite to the tread 51. An example of a method for disposing them is a method of bonding the components to predetermined positions of the inner surface 53 of the tire 50 with an acrylic adhesive. Alternatively, the components may be attached to a separate member and may be disposed on the inner surface 53 via the separate member.

### [Modification]

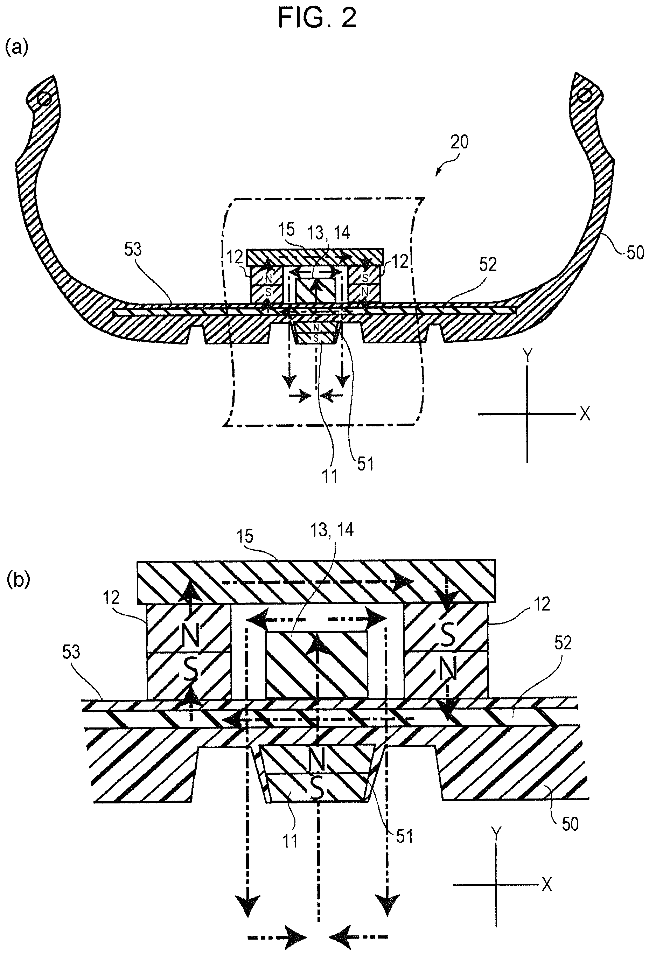

Fig. 2(a) is a schematic cross-sectional view of the tire 50 provided with a tire-wear measuring apparatus 20 according to a modification of the present embodiment. Fig. 2(b) is an enlarged cross-sectional view of the area enclosed by the dashed-dotted line in Fig. 2(a).

The tire-wear measuring apparatus 20 includes a yoke 15 that connects two bias magnets 12. Disposing the yoke 15 allows combining the magnetic forces of the two bias magnets 12 to magnetize the steel wire 52 efficiently.

### [Second Embodiment]

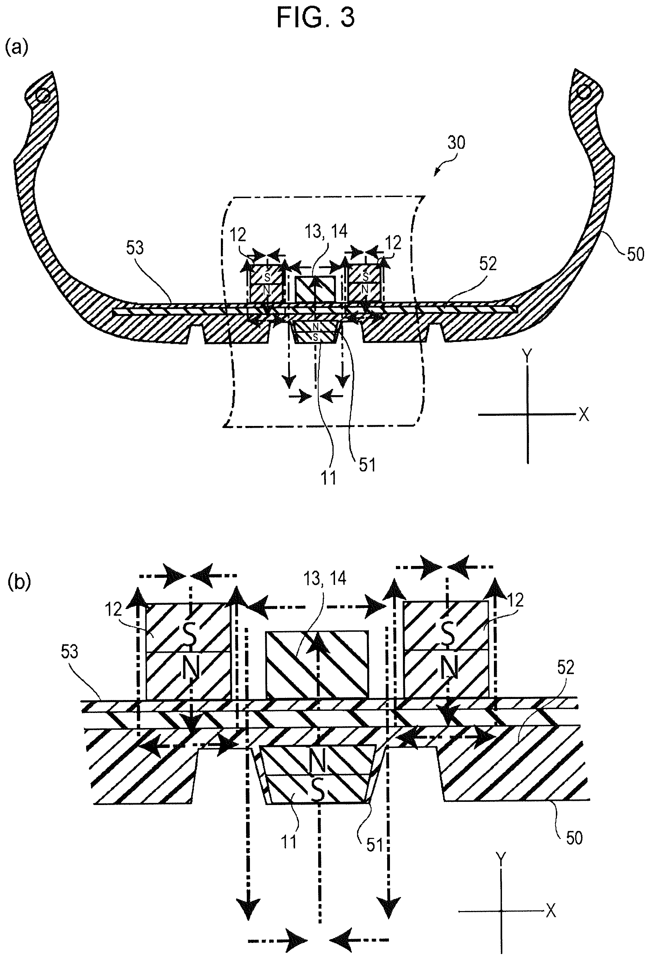

Fig. 3(a) is a schematic cross-sectional view of the tire 50 provided with a tire-wear measuring apparatus 30 according to the present embodiment. Fig. 3(b) is an enlarged cross-sectional view of the area enclosed by the dashed-dotted line in Fig. 3(a).

The tire-wear measuring apparatus 30 of the present embodiment is configured such that the bias magnets 12 are arranged so that opposite magnetic poles face the inner surface 53 of the tire 50. For example, in Fig. 3(b), the bias magnet 12 on the viewer's right is disposed such that the end face on the N-pole side faces the inner surface 53, and the bias magnet 12 on the viewer's left is disposed such that the end face on the M-pole side faces the inner surface 53. The tire-wear measuring apparatus 30 differs from the tire-wear measuring apparatus 10 of the first embodiment in that the wire magnetizing direction in which the steel wire 52 is magnetized is the laminating direction (the Y-axis direction) in which the steel wire 52 and the tread 51 are laminated, and the magnetic-substance magnetizing direction in which the magnetic substance 11 is magnetized is parallel to the wire magnetizing direction. Even if the magnetic-substance magnetizing direction in which the magnetic substance 11 is magnetized and the wire magnetizing direction are parallel, the influence of the external magnetic field on the magnetized state of the steel wire 52 can be reduced. This therefore allows the tire-wear measuring apparatus 30 to accurately measure a change in the magnetic force from the magnetic substance 11 due to the wear of the tread 51, like the tire-wear measuring apparatus 10.

### [Modification]

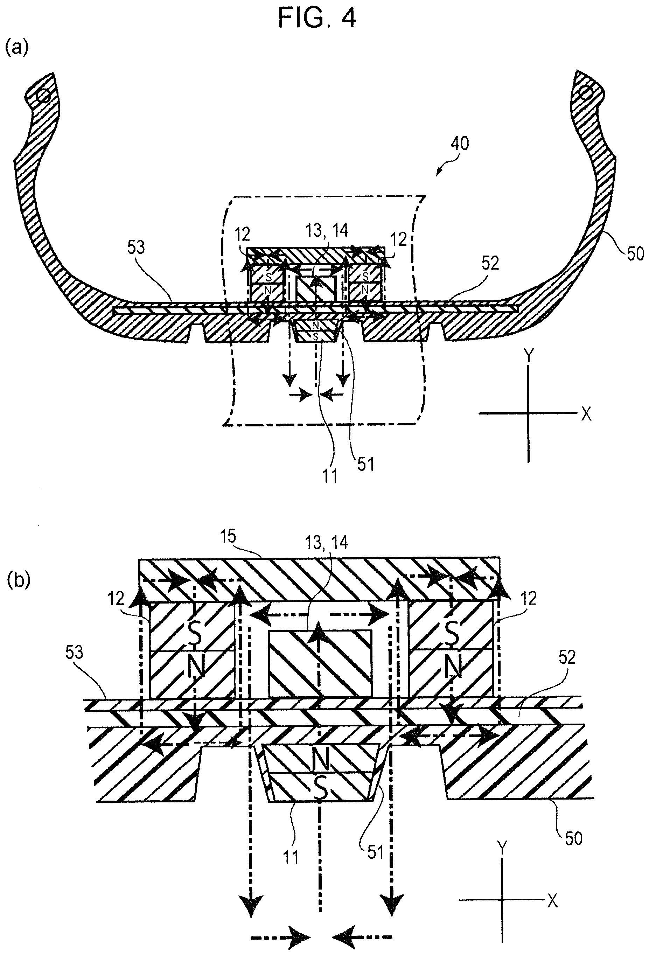

Fig. 4(a) is a schematic cross-sectional view of the tire 50 provided with a tire-wear measuring apparatus 40 according to a modification of the present embodiment. Fig. 4(b) is an enlarged cross-sectional view of the area enclosed by the dashed-dotted line in Fig. 4(a). The tire-wear measuring apparatus 40 includes a yoke 15 that connects two bias magnets 12 and combines the magnetic forces of the two bias magnets 12 by using the yoke 15.

### Industrial Applicability

The present invention can be applied to a tire-wear measuring apparatus that can measure tire wear condition without visual checking.

Reference Signs List
- 10, 20, 30, 40: TIRE-WEAR MEASURING APPARATUS
- 11: MAGNETIC SUBSTANCE
- 12: BIAS MAGNET
- 13: MAGNETIC SENSOR
- 14: RADIO COMMUNICATION MEANS
- 15: YOKE
- 50: TIRE
- 51: TREAD
- 52: STEEL WIRE
- 53: INNER SURFACE

## Claims

1. A tire-wear measuring apparatus that measures wear of a tread of a tire including a steel wire, the apparatus comprising:
a magnetic substance embedded in the tread;
at least one bias magnet that magnetizes the steel wire; and
a magnetic sensor that detects a magnetic force.

2. The tire-wear measuring apparatus according to Claim 1, wherein the bias magnet and the magnetic sensor are disposed on an inner surface of the tire.

3. The tire-wear measuring apparatus according to Claim 1, wherein the steel wire is magnetized to saturation by the bias magnet.

4. The tire-wear measuring apparatus according to Claim 1, wherein a wire magnetizing direction in which the bias magnet magnetizes the steel wire is an orthogonal direction orthogonal to a laminating direction in which the steel wire and the tread are laminated.

5. The tire-wear measuring apparatus according to Claim 4, wherein a magnetic-substance magnetizing direction in which the magnetic substance is magnetized is orthogonal to the wire magnetizing direction.

6. The tire-wear measuring apparatus according to Claim 1, wherein a wire magnetizing direction in which the bias magnet magnetizes the steel wire is a laminating direction in which the steel wire and the tread are laminated.

7. The tire-wear measuring apparatus according to Claim 6, wherein a magnetic-substance magnetizing direction in which the magnetic substance is magnetized is parallel to the wire magnetizing direction.

8. The tire-wear measuring apparatus according to Claim 1,
wherein the at least one bias magnet comprises two bias magnets, and
wherein the tire-wear measuring apparatus further comprises a yoke connecting the two bias magnets.

9. The tire-wear measuring apparatus according to Claim 1, further comprising a radio communication means.
